# EUROPÄISCHE PATENTSCHRIFT

(11) **EP 1 283 776 B1**
(45) Veröffentlichungstag und Bekanntmachung des Hinweises auf die Patenterteilung: **12.07.2006**
(21) Anmeldenummer: 01933962.1
(22) Anmeldetag: 14.05.2001
(51) Int. Cl.: B29C 70/54, B29D 29/00, F16G 1/12, F16G 1/16

(54) **VERFAHREN ZUR HERSTELLUNG VON PRODUKTEN AUS POLYMEREN WERKSTOFFEN, IN DIE FESTIGKEITSTRÄGER EINGEBETTET SIND**
METHOD FOR PRODUCING PRODUCTS FROM POLYMERIC MATERIALS IN WHICH STRENGTHENING SUPPORTS ARE EMBEDDED
PROCEDE DE FABRICATION DE PRODUITS A PARTIR DE MATIERES POLYMERES AUXQUELLES DES ELEMENTS DE RENFORCEMENT SONT INTEGRES

(30) Priorität: 15.05.2000 DE 10023544
(43) Veröffentlichungstag der Anmeldung: 19.02.2003
(73) Patentinhaber: ContiTech Antriebssysteme GmbH, 30165 Hannover (DE)
(72) Erfinder: GÖSER, Hubert, 29451 Dannenberg (DE); WINKLER, Thomas, 29451 Dannenberg (DE); PFANNSCHMIDT, Andreas, 29451 Dannenberg (DE)
(74) Vertreter: Finger, Karsten
(86) Internationale Anmeldenummer: PCT/EP2001/005451
(87) Internationale Veröffentlichungsnummer: WO 2001/087577

(56) Entgegenhaltungen:
- DE-A- 2 512 530
- DE-A- 19 625 221

## Beschreibung

Die Erfindung betrifft ein Verfahren zur Herstellung von Produkten aus polymeren Werkstoffen, in die Festigkeitsträger in Form von Corden oder Cordgeweben eingebettet sind. Ferner betrifft die Erfindung einen Antriebsriemen oder Gurt aus polymerem Werkstoff, in den Festigkeitsträger in Form von Stahlcorden eingebettet sind.

Bei Produkten aus polymeren Werkstoffen, die mit Corden oder Cordgeweben als Festigkeitsträgern verstärkt sind, werden die Eigenschaften des Produktes sowohl durch den verwendeten polymeren Werkstoff als auch durch die eingebetteten Festigkeitsträger beeinflußt. Polymere Werkstoffe sind Elastomere, thermoplastische Elastomere, Thermoplaste und Duroplaste. Je nach dem Einsatzzweck werden Corde oder Cordgewebe aus unterschiedlichsten Materialien, wie z. B. Stahl, Aramid, Baumwolle, Polyester usw., und mit unterschiedlichsten Cordkonstruktionen (Aufbau des Cordes mit Feinheit, Anzahl der Fasern, Drehrichtung, Drehungszahl usw.) eingesetzt. Als Cord wird dabei ein durch ein- oder mehrstufiges Verdrehen, Verzwirnen oder Verschlagen von Einzelfasern (Filamenten) aus Metall (Draht), insbesondere Stahl, oder textilen Materialien erzeugtes faden- oder linienförmiges Gebilde bezeichnet. Aus den Einzelfasern erhält man zunächst Fäden aus textilem Material oder Litzen aus Metall (Stahl), die dann zu Corden weiterverarbeitet werden. In einem Cordgewebe sind die Corde durch Schußfäden zu einem Flächengebilde verbunden. Die Festigkeitsträger unterscheiden sich vor allem in der erreichbaren Festigkeit und ihrem Einfluß auf das Dehnvermögen, die Biegsamkeit und das Bruchverhalten der verstärkten Produkte.

Bei den mit Festigkeitsträgern verstärkten Produkten aus polymeren Werkstoffen kann es sich beispielsweise Antriebsriemen, Hubgurte, Transportbänder, Schläuche oder Reifen handeln. Damit die mit Festigkeitsträgern verstärkten Produkte statischen und dynamischen Dauerbelastungen standhalten, ist eine sehr gute Verbindung zwischen Festigkeitsträger und polymerem Werkstoff erforderlich, die auch chemischen Einflüssen widersteht. Dies kann zum einen durch spezielle Haftsysteme, die z. B. durch einen Tauchprozeß auf die Festigkeitsträger aufgebracht oder einem umgebenden Material zugemischt werden, erreicht werden, zum anderen wird das Standhalten von statischen und dynamischen Dauerbelastungen durch die Konstruktion der Corde und die Art und den Umfang der Durchdringung (Penetration) der Corde mit dem einbettenden polymeren Werkstoff beeinflußt.

Eine ausreichende oder gegebenenfalls möglichst vollständige Durchdringung der Corde mit dem einbettenden Material sorgt für einen gute Verbindung von Festigkeitsträger und einbettendem Material, so dass die entsprechenden Produkte höher belastbar sind. Von besonders hoher Wichtigkeit ist die Durchdringung der Corde mit einbettendem Material in Bereichen, in denen die Einzelfasern oder Fäden bzw. Litzen hohen Relativbewegungen untereinander ausgesetzt sind. Liegt hier eine unzureichende Durchdringung mit einbettendem Material vor, so tritt Cordfadenreibung (Fretting) auf, d. h. der Cord wird durch das Aneinanderreiben der Einzelfasern oder Fäden bzw. Litzen zerstört. Eine ausreichende Durchdringung wirkt diesem Effekt entgegen und sorgt für eine homogene Spannungsverteilung im Produkt. Die Lebensdauer wird erhöht bzw. der zulässige Biegedurchmesser kann verringert werden, was z. B. bei Riemen die Verwendung kleinerer Antriebsaggregate ermöglicht. Außerdem kann mit einer möglichst vollständigen Durchdringung der Festigkeitsträger mit dem einbettenden Material weitgehend verhindert werden, dass bei der Herstellung der Produkte Feuchtigkeit in die Zentren der Corde gelangt, welche z. B. bei Corden aus Stahl Korrosion und damit eine verringerte Haltbarkeit der Produkte bewirkt. Auch bei anderen Festigkeitsträgern, z. B. aus Glas, wirkt sich in Zentren von Corden verbleibende Feuchtigkeit negativ auf die Eigenschaften der Produkte aus.

Bei Cordkonstruktionen, die große Abstände zwischen den Einzelfasern, Fäden oder Litzen aufweisen, kann man eine ausreichende Durchdringung der Corde mit einbettendem polymerem Werkstoff häufig schon durch Aufbringen des einbettenden Material mit Druck - oftmals reicht schon der Materialdruck selbst aus - erreichen. Bei Cordkonstruktionen mit kleinen Abständen zwischen den Einzelfasern, Fäden oder Litzen, also mit engen Öffnungen, in die das einbettende Material eindringen soll, wird auf diese Weise oftmals keine ausreichende Durchdringung erzielt, da das einbettende Material schon vor dem Erreichen innerer Bereiche der Corde aufgrund der unterschiedlichen Temperaturen von Cord und einbettendem Material Erstarrungs- und Vernetzungsprozessen unterliegt.

Aus der DE 196 25 221 A1 ist es bekannt, zur Herstellung eines Zahnriemens mit geringen Teilungsfehlern und höherer Belastbarkeit die Armierungseinlage aus Stahlcord oder dergleichen vor der Aufbringung eines extrudierbaren Kunststoffs aufzuheizen. Es soll damit unter anderem erreicht werden können, dass der Kunststoff an der Oberfläche nicht sofort erstarrt, sondern in Stahlcorde bzw. Stahllitzen besser eindringen kann. Auch aus der DE-A- 25 12 530 ist es bekannt, bei der Herstellung von Fördergurten die metallischen Verstärkungseinlagen unmittelbar vor dem Einsetzen der Vulkanisation elektroinduktiv zu erwärmen.
Es hat sich aber gezeigt, dass mit diesen Verfahren vor allem bei Corden mit engen Öffnungen nicht immer eine ausreichende Durchdringung mit polymeren Werkstoffen erzielt werden kann. Insbesondere die Zentren der Corde werden durch eine vorzeitige Erstarrung oder Vernetzung der polymeren Werkstoffe in den äußeren Bereichen der Corde nicht mehr vom Werkstoff durchdrungen. In den Zentren können sich bei der Herstellung dann gewisse Mengen an Wasser niederschlagen, welche einen negativen Einfluß auf die Eigenschaften und Haltbarkeit der Produkte haben. Cordfadenreibung kann ebenfalls auftreten.

Der vorliegenden Erfindung liegt nun die Aufgabe zu Grunde, ein Verfahren der eingangs genannten Art zu schaffen, mit dem eine wirkungsvolle und ausreichende Durchdringung der Festigkeitsträgercorde mit polymeren Werkstoffen erzielt wird und mit dem Produkte hergestellt werden können, die eine hohe Lebensdauer aufweisen.

Gelöst wird die Aufgabe erfindungsgemäß dadurch, dass bei dem Verfahren gemäß Anspruch 1 zunächst die Festigkeitsträger einer gezielten Temperaturbehandlung unterworfen werden, wobei durch die Temperaturbehandlung innerhalb der einzelnen Corde ein Temperaturgradient zwischen Cordkern und Cordoberfläche erzeugt wird und die Temperaturdifferenz zwischen Cordkern und Cordoberfläche mindestens 10 K beträgt, und dann der polymere Werkstoff oder dessen Ausgangskomponenten durch Extrusion oder Gießen auf die Festigkeitsträger aufgebracht wird bzw. werden.

Unter Cordoberfläche ist dabei der radial äußere Bereich eines Cordes bezogen auf dessen Querschnitt zu verstehen, während unter Cordkern der um den Mittelpunkt oder das Zentrum des Querschnitts eines Cordes befindliche Bereich zu verstehen ist.

Der Grundgedanke der Erfindung ist darin zu sehen, dass für die Durchdringung der Festigkeitsträger mit dem einbettenden Material neben anderen Faktoren, wie der Cordkonstruktion oder der Art der Aufbringung, auch das Erstarrungs- und Vernetzungsverhalten des einbettenden Materials zu beachten ist. Es hat sich herausgestellt, dass die beste Durchdringung der Festigkeitsträger mit polymerem Werkstoff dann erreicht wird, wenn der polymere Werkstoff bzw. dessen Ausgangskomponenten in den Festigkeitsträgercorden vom Zentrum des Cordes zur Oberfläche hin erstarren oder vernetzen, also im Zentrum schneller erstarren oder vernetzen als an der Oberfläche. Dieses kann dadurch erreicht werden, dass sich die Temperaturen im Cordkern und an der Cordoberfläche um mindestens 10 K unterscheiden. Auch bei Cordkonstruktionen mit engen Öffnungen zwischen Einzelfasern und Fäden oder Litzen kann mit diesem Verfahren eine wirkungsvolle und ausreichende Durchdringung der Festigkeitsträger mit einbettendem polymerem Werkstoff erreicht werden.

Werden als polymere Werkstoffe Thermoplaste oder thermoplastische Elastomere verwendet, die in Form einer Schmelze auf die Festigkeitsträger aufgebracht werden, wird die Temperatur an der Cordoberfläche um mindestens 10 K höher gewählt als im Cordkern, damit der Erstarrungsprozeß der Schmelze des Thermoplasten oder des thermoplastischen Elastomers von innen nach außen erfolgen kann und nicht bereits an der Oberfläche erstarrtes Material den Zugang für weiteres Material in den Cordkern versperrt.
Werden dagegen die Ausgangskomponenten von polymeren Werkstoffen, wie z. B. von Elastomeren oder thermoplastischen Elastomeren, auf die Festigkeitsträger aufgebracht, deren Erstarrung, Aushärtung oder Vernetzung durch chemische Vernetzungs- und/oder Polymerisationsreaktion bei höheren Temperaturen stattfindet, so wird die Temperatur an der Cordoberfläche um mindestens 10 K niedriger gewählt werden als im Cordkern, damit die Reaktion von innen nach außen erfolgt.

Durch die wirkungsvolle und ausreichende Durchdringung der Festigkeitsträgercorde mit polymeren Werkstoffen erhält man Produkte, die sich durch eine hohe Lebensdauer auszeichnen, denn die Durchdringung bewirkt, dass effektiv das Aneinanderreiben von Einzeltasern oder Fäden bzw. Litzen verhindert werden kann. Zwischen den Einzelfasern oder Fäden bzw. Litzen befindet sich ausreichend einbettendes Material, welches das Aneinanderreiben unterbindet und damit der frühzeitigen Zerstörung der Corde entgegenwirkt. Da kaum Hohlräume in den Corden verbleiben, in denen sich Feuchtigkeit bei der Herstellung der Produkte sammeln kann, wird auch den negativen Effekten von Wasser in Corden, wie z. B. Korrosion bei Stahlcord, entgegengewirkt.

Weitere Vorteile der Erfindung sind darin zu sehen, dass man durch die optimale Durchdringung mit polymerem Werkstoff einen sehr homogenen Materialverbund erhält, bei dem Spannungsspitzen z. B. bei Biegebelastung reduziert werden und eine homogenere Spannungsverteilung vorliegt. Auch dieser Effekt trägt zu einer Erhöhung der Lebensdauer der Produkte bei. Außerdem kann man bei nach diesem Verfahren hergestellten Produkten den zulässigen Biegedurchmesser verringern, da die Einzelfasern ausreichend mit einbettendem Material umgeben sind. Auf diese Weise ist es z. B. bei Antriebsriemen oder Gurten möglich, die Antriebsscheiben und Antriebsaggregate zu verkleinern.

Zusätzlich kann mit dem Verfahren eine gleichmäßigere Oberflächenstruktur der Produkte erzielt werden. Da das die Festigkeitsträger einbettende Material häufig nur von einer Seite auf eine Schar von Festigkeitsträgercorden beispielsweise durch Extrusion oder Gießen aufgebracht wird, muß das einbettende Material durch die Schar von Festigketisträgern hindurch gedrückt werden, um eine vollständige Einbettung der Corde auch auf der der Aufbringungsseite gegenüberliegenden Seite zu gewährleisten. Dabei sollte das einbettende Material nach Möglichkeit beim Durchdrückprozeß an der am weitesten fortgeschrittenen Front nicht zu früh, d. h. nicht vor dem vollständigen Passieren der Corde, erstarren und z. B. eine Hautbildung zeigen. Erstarrt das Material zu früh, erhält man häufig an der der Aufbringungsseite gegenüberliegenden Seite des Produktes eine unregelmäßige Oberfläche; man erkennt z. B. dünne Rillen, die parallel zu den Corden verlaufen. Durch das erfindungsgemäße Verfahren kann man das Auftreten der unregelmäßigen Oberflächenstruktur verhindern oder vermindern, da das einbettende Material die Corde besser durchdringt. Durch eine gleichmäßigere Oberfläche, speziell an der Laufseite, kann z. B. bei Riemen oder Gurten, die an Rollen vorbeilaufen eine höhere Laufruhe erzielt werden.

Die Temperaturbehandlung (Wärme- oder Kältebehandlung) kann als ein einstufiger Prozeß durchgeführt werden, d. h. die Festigkeitsträgercorde werden vor dem Aufbringen des polymeren Werkstoffs bzw. dessen Ausgangskomponenten in einer Stufe derart temperiert, dass die Temperaturdifferenz zwischen Cordkern und Cordoberfläche mindestens 10 K beträgt. Vorteilhafter ist es aber, wenn die Temperaturbehandlung durch eine merhstufige Temperaturbeaufschlagung erfolgt. Auf diese Weise können die Festigkeitsträgercorde zunächst so erwärmt werden, dass innerhalb des Cordes eine geringe Temperaturdifferenz vorliegt, und erst kurz vor dem Aufbringen des polymeren Werkstoffes wird die Temperatur an der Cordoberfläche durch eine weitere Temperaturbehandlung (Wärme- oder Kältebehandlung) verändert. Man kann so eine große Temperaturdifferenz zwischen Cordkern und Cordoberfläche erreichen. Mit einem mehrstufigen Prozeß kann man gezielter Einfluß auf die Temperatur von Cordkern und Cordoberfläche nehmen.

Gemäß einer vorteilhaften Weiterbildung der Erfindung können die einzelnen Stufen der Temperaturbehandlung durch Heißluft, Kaltluft, Wärmeleitung, Wärmestrahlung oder bei elektrisch leitfähigen Festigkeitsträgern auf induktivem Wege erfolgen. Die Arten der Temperaturbehandlung sind auch kombinierbar.

Als Materialien für die Festigkeitsträger können z. B. Aramide, Carbonfasern, Fasern aus Poly(p-phenylen-2,6-benzobisoxazol) (PBO) oder Glasfasern verwendet werden. Besonders vorteilhaft ist es allerdings, wenn die Festigkeitsträger Stahlcorde sind. Stahl kann aufgrund seiner guten Wärmeleitfähigkeit schnell erwärmt werden und hält auch hohen Temperaturen stand. Stahlcorde zeichnen sich außerdem durch eine besonders hohe Zugfestigkeit aus.

Wird ein Thermoplast oder ein thermoplastisches Elastomer durch Extrusion auf die Festigkeitsträger aufgebracht, hat es sich als sinnvoll erwiesen, dass die Temperatur an der Cordoberfläche um mindestens 10 K, vorzugsweise um 20 bis 50 K, niedriger liegt als die Temperatur der Schmelze des Thermoplasten oder des thermoplastischen Elastomers und um mindestens 10 K, vorzugsweise um 30 bis 70 K, höher liegt als die Temperatur im Cordkern. Ausgehend von der Temperatur der Schmelze stellt man die Temperaturen der Cordoberfläche und des Cordkerns wie vorgenannt ein. Dadurch, dass die Temperatur der Schmelze um mindestens 10 K höher liegt, als die Temperatur der Cordoberfläche wird erreicht, dass die Schmelze durch die mit ihr eingetragene Wärmemenge nicht bereits an der Oberfläche erstarrt. Der Erstarrungsprozeß der Schmelze beginnt erst im kühleren Cordkern und erfolgt dann von innen nach außen. Die Festigkeitsträgercorde werden so bis in den Kern hinein von der Schmelze des Thermoplasten oder des thermoplastischen Elastomers durchdrungen.

Als Thermoplast oder thermoplastisches Elastomer können alle dem Fachmann bekannten Thermoplaste oder thermoplastischen Elastomere eingesetzt werden, vor allem solche, deren Shorehärten im Gebrauchstemperaturbereich größer oder gleich 75 ShA und kleiner oder gleich 97 ShA sind. Besonders vorteilhaft ist es allerdings, wenn ein Polyurethan, beispielsweise ein thermoplastisches Polyurethan, für die Einbettung der Festigkeitsträger verwendet wird. Polyurethan zeichnet sich durch eine hohe Abriebfestigkeit, eine hohe Flexibilität, eine gute chemische Beständigkeit, eine gute Reißfestigkeit sowie einen hohen Weiterreißwiderstand aus. Damit kann die Lebensdauer und Haltbarkeit der nach dem erfindungsgemäßen Verfahren hergestellten Produkte weiter erhöht werden.

In einer anderen Ausführungsvariante der Erfindung werden die Ausgangskomponenten eines polymeren Werkstoffes durch Gießen auf die Festigkeitsträger aufgebracht, wobei die Temperatur an der Cordoberfläche um mindestens 10 K höher liegt als die Temperaturen der gießfähigen Ausgangskomponenten, hinreichend ist für eine Polymerisation und/oder Vernetzung der Ausgangskomponenten und um mindestens 10 K niedriger liegt als die Temperatur im Cordkern. Da bei dieser Ausführungsvariante die polymeren Werkstoffe fest werden, indem eine Vernetzungs- und/oder Polymerisationsreaktion bei erhöhten Temperaturen stattfindet, wählt man die Cordkerntemperatur höher, damit dort die Reaktion schneller erfolgt als an der Cordoberiläche. Aber auch an der Oberfläche muß die Temperatur für eine Reaktion ausreichen, dort läuft sie nur langsamer ab. Im Zusammenhang mit Temperaturabhängigkeit von Reaktionsgeschwindigkeiten sei dabei auf die chemische Reaktionskinetik verwiesen. Als polymere Werkstoffe können bei dieser Ausführungsvariante beispielsweise Urethan-Elastomere eingesetzt werden, deren gießfähige Ausgangskomponenten wie Polyester, Polyether, Diisocyanat und Diol oder Präpolymere daraus auf die Festigkeitsträger aufgebracht werden und ausreagieren.

Antriebsriemen oder Gurte sind Produkte aus polymeren Werkstoffen, in die Festigkeitsträger in Form von Stahlcorden eingebettet sind, erhältlich durch das Verfahren gemäß Anspruch 1. Solche Produkte sind dadurch gekennzeichnet, dass bei deren Herstellung zunächst die Festigkeitsträger einer gezielten Temperaturbehandlung unterworfen werden, wobei durch die Temperaturbehandlung innerhalb der einzelnen Corde ein Temperaturgradient zwischen Cordkern und Cordoberfläche erzeugt wird und die Temperaturdifferenz zwischen Cordkern und Cordoberfläche mindestens 10 K beträgt, und dann der polymere Werkstoff oder dessen Ausgangskomponenten durch Extrusion oder Gießen auf die Festigkeitsträger aufgebracht wird bzw. werden.

Solche Antriebsriemen oder Gurte zeichnen sich hervorgerufen durch die wirkungsvolle und ausreichende Durchdringung mit einbettendem Material durch eine besonders hohe Lebensdauer bei Biegebelastung aus. Bei Antriebsriemen und Gurten ist diese Eigenschaft von besonders hohem Nutzen, da diese Produkte in ihrem Einsatz einer hohen Biegebelastung, z. B. in Antriebsaggregaten oder Hub-, Förder- und Fahrstuhlanlagen, unterliegen. Spannungsspitzen innerhalb des Riemens oder Gurtes werden reduziert, der zulässige Biegedurchmesser kann verringert werden und Cordfadenreibung wird vermindert.

Besonders bevorzugt ist, wenn bei dem Antriebsriemen oder Gurt ein Thermoplast oder ein thermoplastisches Elastomer, insbesondere ein Polyurethan, auf die Festigkeitsträger durch Extrusion aufgebracht wird, wobei die Temperatur an der Cordoberfläche um mindestens 10 K, insbesondere um 20 bis 50 K, niedriger liegt als die Temperatur der Schmelze des Thermoplasten oder des thermoplastischen Elastomers und um mindestens 10 K, insbesondere um 30 bis 70 K, höher liegt als die Temperatur im Cordkern. Auf diese Weise kann man die vorgenannten positiven Eigenschaften des Antriebsriemens oder Gurts durch vorteilhaftere Durchdringung noch weiter verbessern. Die Vorzüge des Werkstoffes Polyurethan können genutzt werden.

Im Folgenden wird die Erfindung anhand eines Ausführungsbeispiels im Zusammenhang mit den nachstehenden Figuren näher erläutert, ohne dass die Erfindung jedoch auf dieses Beispiel beschränkt ist.
Fig. 1 zeigt schematisch eine Vorrichtung zur Durchführung des erfindungsgemäßen Verfahrens.
Fig. 2 zeigt schematisch den Querschnitt eines Riemen oder Gurtes, der mit dem erfindungsgemäßen Verfahren hergestellt wurde.
Fig. 3 zeigt vergrößert den Querschnitt durch einen Stahlcord.

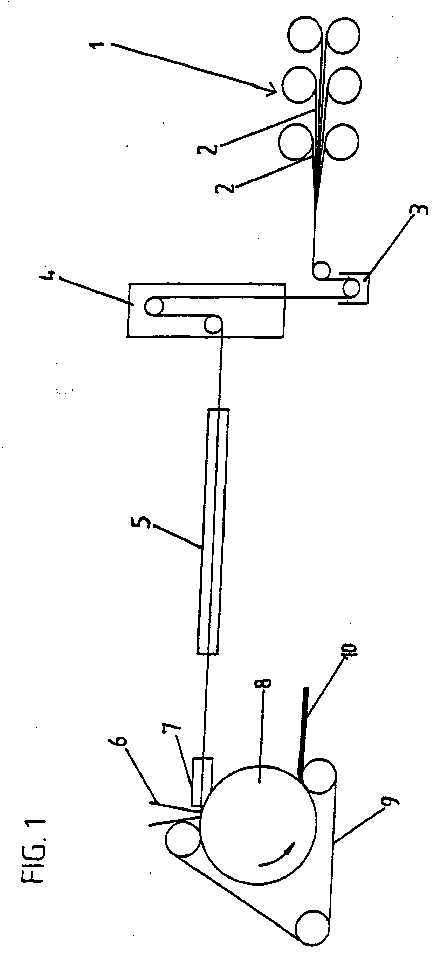

In Fig. 1 ist eine Vorrichtung dargestellt, mit der ein Riemen oder Hubgurt nach dem erfindungsgemäßen Verfahren hergestellt wird. Von einem Spulengatter 1 werden Festigkeitsträger 2 in Form von Stahlcorden abgezogen, die anschließend als Bahn paralleler Corde durch ein Tauchbad 3 laufen und dort mit einer Haftvermittlersubstanz für die Haftung zwischen Metall und polymerem Werkstoff versehen werden. In einem Ofen 4 erfolgt die Trocknung der Haftvermittlersubstanz. Die auf diese Art behandelte Lage von Stahlcorden 2 durchläuft dann eine erste Heizzone 5, bei der Heißluft je nach der Vorschubgeschwindigkeit der Stahlcorde 2, der Cordkonstruktion und der Temperatur der Heißluft über eine bestimmte Strecke auf die Stahlcorde 2 einwirkt. Am Ende dieser ersten Heizzone 5 weist der Stahlcord 2 eine Temperatur von ca. 100 °C auf und die Temperaturdifferenz zwischen Cordkern und Cordoberfläche ist gering. Kurz bevor die Schmelze eines Thermoplasten oder eines thermoplastischen Elastomers durch die Extruderdüse 6 eines nicht dargestellten Extruders auf die Stahlcorde 2 aufgebracht wird, durchlaufen die Stahlcorde eine zweite kurze Heizzone 7, in der die Stahlcorde 2 in Kontakt mit einer elektrisch beheizten Fläche, deren Temperatur 220 bis 240 °C beträgt, stehen. Mit dieser zweiten Heizzone 7 wird erreicht, dass die Temperatur an der Cordoberfläche kurz vor dem Aufbringen der Schmelze eine Temperatur von 150 bis 160 °C aufweist, die Cordkerntemperatur liegt dagegen um mindestens 10 K unter diesem Wert. Die Schmelze wird im Anschluß mit einer Temperatur von ca. 200 °C auf die Stahlcorde 2 aufgebracht. Die heiße Schmelze dringt in den Stahlcord 2 ein und erstarrt von innen nach außen. In einer Ausformeinheit aus gekühlter Ausformtrommel 8 mit dagegen pressendem Stahlband 9 wird der Riemen oder Gurt 10 dann ausgeformt.

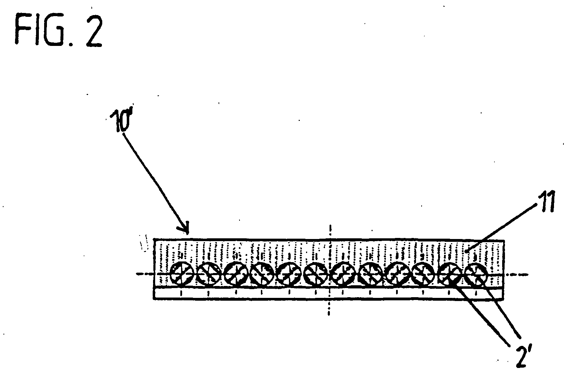

Ein Riemen oder Gurt 10', der nach dem erfindungsgemäßen Verfahren z. B. in der Vorrichtung nach Fig. 1 hergestellt wurde, ist in Fig. 2 im Querschnitt dargestellt. Es handelt sich um einen Riemen oder Gurt 10', der beispielsweise als Hubgurt in Fahrstuhlanlagen verwendet werden kann. Er kann in einer solchen Anlage die herkömmlicher Weise verwendeten Stahlseile ersetzen. Zwölf Stahlcorde 2' sind in einem solchen Gurt 10' in einen polymeren Werkstoff 11, z. B. thermoplastisches Polyurethan, eingebettet.

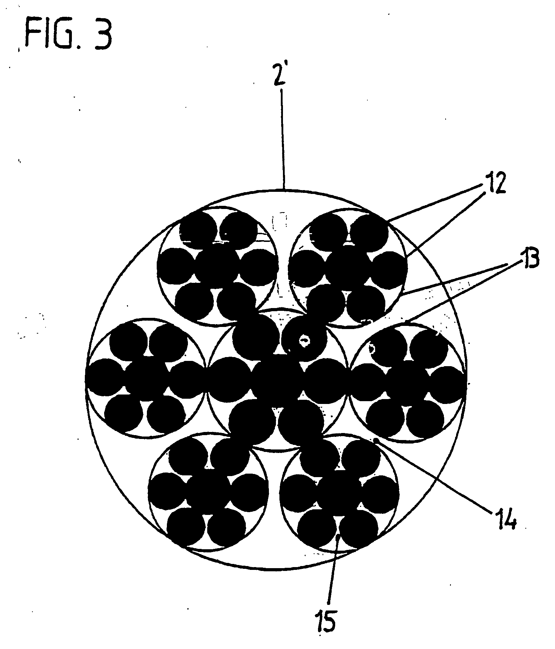

Der Aufbau eines für einen derartigen Gurt 10' verwendeten Stahlcords 2' ist in Fig. 3 dargestellt. Je sieben Einzelfasern 12 unterschiedlichen Durchmessers aus Stahl sind zu Litzen 13 verdreht, von denen wiederum sieben zu dem Stahlcord 2' verdreht werden. Der polymere Werkstoff bzw. dessen Ausgangskomponenten muß bzw. müssen bei der Herstellung sowohl in die Zwischenräume 14 zwischen den Litzen 13 als auch in die Zwischenräume 15 zwischen den Einzelfasern 12 aus Stahl eindringen können, um die für eine höhere Lebensdauer erforderliche Durchdringung des Cordes zu erreichen. Dies kann man mit dem erfindungsgemäßen Verfahren auch bei kleinen Zwischenräumen 14 und 15 verwirklichen.

### Bezugszeichenliste

- 1: Spulengatter
- 2, 2': Festigkeitsträger, Stahlcord
- 3: Tauchbad mit Haftvermittlersubstanz
- 4: Ofen zur Trocknung der Haftvermittlersubstanz
- 5: erste Heizzone
- 6: Extruderdüse
- 7: zweite Heizzone
- 8: Ausformtrommel
- 9: Stahlband
- 10, 10': Riemen, Gurt
- 11: polymerer Werkstoff
- 12: Einzelfaser
- 13: Litze
- 14, 15: Zwischenräume innerhalb des Stahlcords

## Patentansprüche

1. Verfahren zur Herstellung von Produkten aus polymeren Werkstoffen (11), in die Festigkeitsträger (2, 2') in Form von Corden oder Cordgeweben eingebettet sind,
**dadurch gekennzeichnet, dass**
zunächst die Festigkeitsträger (2, 2') einer gezielten Temperaturbehandlung unterworfen werden, wobei durch die Temperaturbehandlung innerhalb der einzelnen Corde ein Temperaturgradient zwischen Cordkern und Cordoberfläche erzeugt wird und die Temperaturdifferenz zwischen Cordkern und Cordoberfläche mindestens 10 K beträgt, und dann der polymere Werkstoff (11) oder dessen Ausgangskomponenten durch Extrusion oder Gießen auf die Festigkeitsträger (2, 2') aufgebracht wird bzw. werden.

2. Verfahren nach Anspruch 1, **dadurch gekennzeichnet, dass** dis Temperaturbehandlung durch eine mehrstufige Temperaturbeaufschlagung (5, 7) erfolgt.

3. Verfahren nach Anspruch 2, **dadurch gekennzeichnet, dass** die einzelnen Stufen (5, 7) der Temperaturbehandlung durch Heißluft, Kaltluft, Wärmeleitung, Wärmestrahlung oder auf induktivem Wege erfolgen.

4. Verfahren nach zumindest einem der Ansprüche 1 bis 3, **dadurch gekennzeichnet, dass** die Festigkeitsträger (2, 2') Stahlcorde sind.

5. Verfahren nach zumindest einem der Ansprüche 1 bis 4, **dadurch gekennzeichnet, dass** ein Thermoplast oder ein thermoplastisches Elastomer auf die Festigkeitsträger (2, 2') durch Extrusion aufgebracht wird, wobei die Temperatur an der Cordoberfläche um mindestens 10 K niedriger liegt als die Temperatur der Schmelze des Thermoplasten oder des thermoplastischen Elastomers und um mindestens 10 K höher liegt als die Temperatur im Cordkern.

6. Verfahren nach Anspruch 5, **dadurch gekennzeichnet, dass** die Temperatur an der Cordoberfläche um 20 bis 50 K niedriger liegt als die Temperatur der Schmelze des Thermoplasten oder des thermoplastischen Elastomers und um 30 bis 70 K höher liegt als die Temperatur im Cordkern.

7. Verfahren nach einem der Ansprüche 5 oder 6, **dadurch gekennzeichnet, dass** ein Polyurethan auf die Festigkeitsträger (2, 2') aufgebracht wird.

8. Verfahren nach zumindest einem der Ansprüche 1 bis 4, **dadurch gekennzeichnet, dass** die Ausgangskomponenten eines polymeren Werkstoffes (11) durch Gießen auf die Festigkeitsträger (2, 2') aufgebracht werden, wobei die Temperatur an der Cordoberfläche um mindestens 10 K höher liegt als die Temperaturen der gießfähigen Ausgangskomponenten, hinreichend ist für eine Polymerisation und/oder Vernetzung der Ausgangskomponenten und um mindestens 10 K niedriger liegt als die Temperatur im Cordkern.

## Claims

1. Method for producing products from polymeric materials (11) in which strengthening supports (2, 2') in the form of cords or woven cords are embedded, **characterized in that** the strengthening supports (2, 2') are firstly subjected to a directed temperature treatment, the temperature treatment producing inside the individual cords a temperature gradient between the cord core and the cord surface, and the temperature difference between the cord core and the core surface being equal to at least 10 K, and then the polymeric material (11) or the starting constituents thereof is/are applied to the strengthening supports (2, 2') by extrusion or casting.

2. Method according to Claim 1, **characterized in that** the temperature treatment is performed by a multistage exposure to temperature (5, 7).

3. Method according to Claim 2, **characterized in that** the individual stages (5, 7) of the temperature treatment are performed by hot air, cold air, heat conduction, heat radiation or by inductive means.

4. Method according to at least one of Claims 1 to 3, **characterized in that** the strengthening supports (2, 2') are steel cords.

5. Method according to at least one of Claims 1 to 4, **characterized in that** a thermoplastic or a thermoplastic elastomer is applied to the strengthening supports (2, 2') by extrusion, the temperature at the cord surface being lower by at least 10 K than the temperature of the melt of the thermoplastic or of the thermoplastic elastomer and higher by at least 10 K than the temperature in the cord core.

6. Method according to Claim 5, **characterized in that** the temperature at the cord surface is lower by 20 to 50 K than the temperature of the melt of the thermoplastic or of the thermoplastic elastomer and higher by 30 to 70 K than the temperature in the cord core.

7. Method according to either of Claims 5 and 6, **characterized in that** a polyurethane is applied to the strengthening supports (2, 2').

8. Method according to at least one of Claims 1 to 4, **characterized in that** the starting constituents of a polymeric material (11) are applied to the strengthening supports (2, 2') by casting, the temperature at the cord surface being higher by at least 10 K than the temperatures of the castable starting constituents, sufficient for polymerization and/or crosslinking of the starting constituents and lower by at least 10 K than the temperature in the cord core.

## Revendications

1. Procédé de fabrication de produits en matériaux polymères (11) dans lesquels des renforts (2, 2') qui présentent la forme de câbles ou de tissus de câbles sont incorporés,
**caractérisé en ce que**
les renforts (2, 2') subissent d'abord un traitement thermique contrôlé, le traitement thermique créant à l'intérieur des câbles individuels un gradient de température entre l'âme du câble et la surface du câble, la différence de température entre l'âme du câble et la surface du câble étant d'au moins 10 K, le matériau polymère (11) ou ses composants de départ étant ensuite appliqués sur les renforts (2, 2') par extrusion ou coulée.

2. Procédé selon la revendication 1, **caractérisé en ce que** le traitement thermique s'effectue par montée en température (5, 7) en plusieurs échelons.

3. Procédé selon la revendication 2, **caractérisé en ce que** les échelons individuels (5, 7) du traitement thermique sont réalisés à l'aide d'air chaud, d'air froid, par conduction thermique, irradiation thermique ou par des moyens inductifs.

4. Procédé selon au moins l'une des revendications 1 à 3, **caractérisé en ce que** les renforts (2, 2') sont des câbles en acier.

5. Procédé selon au moins l'une des revendications 1 à 4, **caractérisé en ce qu'**on applique par extrusion un thermoplastique ou un élastomère thermoplastique sur les renforts (2, 2'), la température à la surface des câbles étant d'au moins 10 K plus basse que la température du bain de thermoplastique ou d'élastomère thermoplastique fondu et d'au moins 10 K supérieure à la température au coeur du câble.

6. Procédé selon la revendication 5, **caractérisé en ce que** la température à la surface des câbles est de 20 à 50 K plus basse que la température du bain de thermoplastique ou d'élastomère thermoplastique fondu et de 30 à 70 K plus élevée que la température au coeur du câble.

7. Procédé selon l'une des revendications 5 ou 6, **caractérisé en ce que** l'on applique un polyuréthane sur les renforts (2, 2').

8. Procédé selon au moins l'une des revendications 1 à 4, **caractérisé en ce que** les composants de départ d'un matériau polymère (11) sont appliqués par coulée sur les renforts (2, 2'), la température à la surface des câbles étant d'au moins 10 K plus élevée que la température des composants de départ coulés, étant suffisante pour la polymérisation et/ou la réticulation des composants de départ et étant d'au moins 10 K plus basse que la température au coeur du câble.
